# EUROPEAN PATENT APPLICATION

(11) **EP 2 309 179 A1**
(43) Date of publication of application: **13.04.2011**
(21) Application number: 10187191.1
(22) Date of filing: 11.10.2010
(51) Int. Cl.: F21V 33/00

(54) **A table having a glass table top provided with LED's**

(30) Priority: 12.10.2009 EP 09075459
(71) Applicant: Cox, Frank, 5961 NM Horst (NL)
(72) Inventor: Cox, Frank, 5961 NM Horst (NL)

(57) **Abstract**

The invention pertains to a table comprising a table top supported by one or more vertical legs, the table top comprising a glass plate having in essence a horizontally surface, wherein the table is provided with multiple light emitting diodes arranged along one or more sides of the glass plate such that each diode emits light into a side of the plate when switched on.

## Description

The present invention pertains to tables, viz. furniture for household, business or other use comprising a table top supported by one or more vertical legs, the table top having in essence a horizontal surface to enable supporting of objects.

It is known to use a glass plate as a table top, for example to constitute the complete supporting surface of the table or a part thereof. Glass is widely used for table tops given the fact that it has a classic but timeless appearance, and thus is appealing to many people. Moreover, glass is mechanically very stable and easy to clean. A big disadvantage of a glass table top is the fact that glass is transparent. Due to this transparency some surface stains are quite visible. Also, due to this transparency the environment beneath the glass table is visible with the eye when for example sitting along the table. This is generally regarded as another disadvantage of glass table tops.

In the prior art there have been provided solutions to mitigate the above mentioned disadvantages. Many of these propose to provide an opaque coating on either side of the glass plate or otherwise proved the table with opaque properties. This however significantly alters the appearance of the glass table top and more or less gives the impression of a regular opaque table top made for example of metal, resin or any other opaque but shiny material.

It was an object of the present invention to mitigate the disadvantages of a table with a fully transparent glass table top, but still keep an appearance that is significantly different from table tops of opaque but shiny materials. To this end a table according to the preamble has been devised, wherein the table is provided with multiple light emitting diodes arranged along one or more sides of the glass plate such that each diode emits light into a side of the plate when switched on.

Surprisingly it has been found when light emitted by diodes (LED's) enters a side of a table top glass plate, the prior art problems can be overcome or at least mitigated, while still having typical characteristics that set such a glass table apart from other types of tables. It appears that the actual transparency of the table can be lowered (thus mitigating the prior art problems) merely by having LED light enter the side of the glass plate, while a virtual (experienced) transparency is still maintained. Surprisingly only a very low amount of light is sufficient to provide a desired effect. Part of this may be due to typical light emitted by diodes. It is believed however that the effect is mainly due to the entry of the light into a side edge of the table top. An important advantage of diodes is the high energy transformation which assures that the plate virtually keeps it's temperature, even when LED's are arranged completely surrounding the table. Depending on the type of table, for example round or polygon shaped (e.g. square, rectangular), one or more sides could be provided with LED's, depending on the effect one desires. It has been found however that the object of the invention is best met when the LED's completely, preferably evenly, surround the table top. In this embodiment each individual LED needs to produce only very little light, which helps to achieve that the light is very evenly and in a soft way distributed through the glass table top. It is noted that the glass table top may be made of (or comprise) mineral glass, but may also be made of (or comprise) artificial glass, such as glass based on translucent polymer material, e.g. Perspex™ (Plexiglass™ or Lucite™), or even a product composed of different types of glass, multilayered glass etc.

In an embodiment, the light emitting diodes are mounted in one or more frame parts, which frame parts are arranged along one or more sides of the glass plate. This embodiment not only provides more freedom of design, it also enables the separate constitution of the glass table top and the LED-arrangement. In a preferred embodiment the glass plate is supported by one frame part that surrounds the glass plate substantially completely. In this embodiment the glass plate may for example be supported by the frame. The frame needs not to surround the glass plate completely, it may for example be that the surrounding frame consists of two separate (twin) frame parts that are placed virtually contiguously but still allow some movement with relative to for example the glass plate.

In an embodiment there is a predetermined space between a light emitting surface of each diode and a side of the table. The person skilled in the art of light and light reflection would be inclined to place the light emitting surface of a diode directly against the side of the glass plate. This namely ensures a proper and adequate entry of the light in the plate. Applicant however recognised that despite the relatively low temperature of LED's, the amount of heat transferred to the glass plate may be sufficient to expand the plate a little bit in it's length directions. Would there be no space between the LED surface and the glass plate, then after many heat and cool cycles the LED may be damaged and functionality may be lost. By having at least a predetermined space between the LED and plate, typically between 0.2 and 5 mm, preferably between 0.5 and 2 mm, this can be prevented while surprisingly keeping the technical effects to an adequate level or even improve it due to the slightly diffuse entry of the light. Also, the space makes sure that even less heats will be taken up by the glass plate.

In an embodiment the table comprises an energy source to provide the diodes with power to bring them in a light emitting state. Although it is in principle possible to supply sufficient power to the LED's via an external power source, for example a regular 220V or 110V power network, but since LED's require only a very low power supply, an energy source can be comprised in the table, for example in the frame of the glass plate or in a vertical leg. In an embodiment the energy source is a battery. This battery may be charged via means provided in the table to charge the battery, such as a socket which may be connected via a plug to an external electricity network. In another embodiment the table itself is provided with means to charge the battery, preferably a solar panel, but any other energy generating device as known in the prior art may be used.

In an embodiment the glass plate has a bottom surface which is provided with a pattern that reflects light emitted by the diodes. In this embodiment the pattern can be used to create various technical effects such as optical brightness, the visualisation of logos or other marks, even pictures could be made visible via such a pattern. The pattern may be durable or may be changed in the course of time or even switchable such as a pattern that can be arrived at via electric or magnetic steering of small particles such as known in e-paper (electronic paper) or LCD displays. In general the pattern is provided by mechanical means (sand blasting, milling, sanding etc.), chemical means (etching, colouring etc.) or physical means (applying a coating etc.) or by a combination of one or more of these means such as when an electronic (e-paper like) layer is provided at a surface of the glass plate.

In an embodiment at least part of the light emitting diodes is able to emit light of various colour. This increase the technical effects that can be provided in order to overcome various problems associated with actual transparency.

In an embodiment at least part of the light emitting diodes can be switched off.

The invention will be further explained based on the following figures.
Figure 1 represents a side view of a table with a glass table top, enclosed in a surrounding metal frame
Figure 2 schematically shows a cross section of the table at the site where a LED is situated.
Figure 3 schematically shows light entering a glass plate being patterned with a light reflecting layer at its bottom surface.

### Figure 1

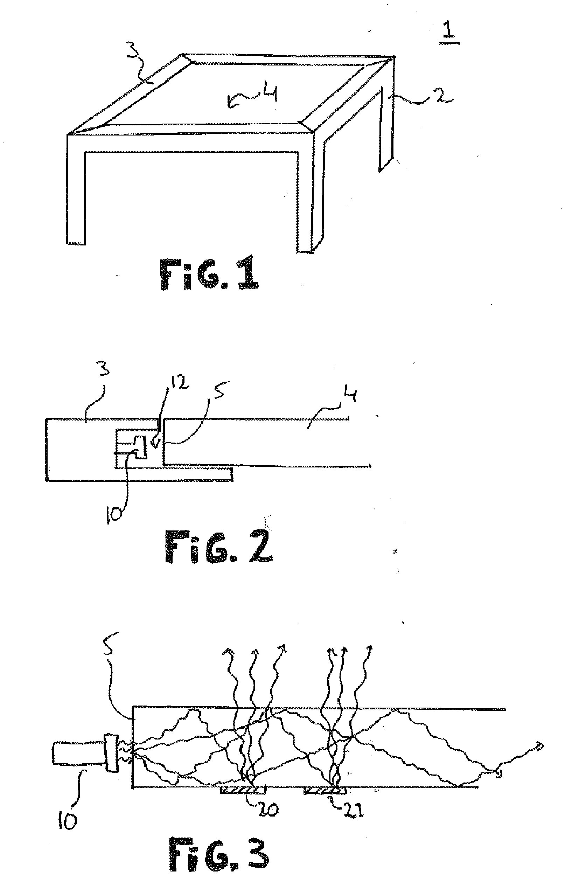

Figure 1 represents a side view of a table 1 with a glass table top 4, enclosed in a surrounding metal frame 3. The table is supported by four legs 2.

### Figure 2

Figure 2 schematically shows a cross section of the table 1 according to figure 1 at the site where a LED 10 is situated. The frame part 3 is constituted such that it is able to serve as a support for glass table top 4. In this embodiment the top surface of the glass plate is the carrying surface of the table. It may however be that the glass plate is provided for example with a coating or other top layer, depending on the desires of a user. In a hollow part of frame part 3 there is provided a LED 10 which is situated such that whenswitched on, it emits light into the side 5 of glass plate 4. There is provided a space 12 (0.9 mm) between LED 10 and side 5 in order to reduce heat transfer to the glass plate and to make sure that the LED remains separate from the glass plate.

### Figure 3

Figure 3 schematically shows light entering a glass plate being patterned with a light reflecting layer at its bottom surface. This layer is schematically represented by two roughened islands 20 and 21 which reflect light somewhat diffuse towards the top surface of the plate such that the light beams leave the plate instead of being captured in it. This may provide a desired technical effect as well as a desired appearance.

## Claims

1. A table comprising a table top supported by one or more vertical legs, the table top comprising a glass plate having in essence a horizontally surface, **characterised in that** the table is provided with multiple light emitting diodes arranged along one or more sides of the glass plate such that each diode emits light into a side of the plate when switched on.

2. A table according to claim 1, **characterised in that** the light emitting diodes are mounted in one or more frame parts, which frame parts are arranged along one or more sides of the glass plate.

3. A table according to claim 2, **characterised in that** the glass plate is supported by one frame part that surrounds the glass plate substantially completely.

4. A table according to any of the preceding claims, **characterised in that** there is a predetermined space between a light emitting surface of each diode and a side of the table.

5. A table according to any of the preceding claims, **characterised in that** the table comprises an energy source to provide the diodes with power to bring them in a light emitting state.

6. A table according to claim 5, **characterised in that** the energy source is a battery.

7. A table according to claim 6, **characterised in that** the table is provided with means to connect the battery with an external energy source to charge the battery.

8. A table according to claim 6,**characterised in that** the table is provided with means to charge the battery, preferably a solar panel.

9. A table according to any of the preceding claims, **characterised in that** the glass plate has a bottom surface which is provided with a pattern that reflects light emitted by the diodes.

10. A table according to claim 9, **characterised in that** the pattern is provided by mechanical, chemical, physical means or by a combination of one or more of these means.

11. A table according to any of the preceding claims, **characterised in that** at least part of the light emitting diodes is able to emit light of various colour.

12. A table according to any of the preceding claims, **characterised in that** at least part of the light emitting diodes can be switched off.
